# FASCICULE DE BREVET EUROPEEN

(11) **EP 4 363 310 B1**
(45) Date de publication et mention de la délivrance du brevet: **06.08.2025**
(21) Numéro de dépôt: 22733444.8
(22) Date de dépôt: 16.06.2022
(51) Int. Cl.: B64C 1/14

(54) **PROTECTEUR ANTIBLOCAGE DE CHAMP DE PORTE DE VEHICULE**
ANTIBLOCK-FAHRZEUGTÜRKANTENSCHUTZ
ANTIBLOCKING VEHICLE DOOR EDGE PROTECTOR

(30) Priorité: 28.06.2021 FR 2106953
(43) Date de publication de la demande: 08.05.2024
(73) Titulaire: Latecoere, 31500 Toulouse (FR)
(72) Inventeur: DEVILLEZ, Sébastien, 31240 SAINT JEAN (FR)
(74) Mandataire: Junca, Eric
(86) Numéro de dépôt international: PCT/EP2022/066449
(87) Numéro de publication internationale: WO 2023/274740

(56) Documents cités:
- FR-A1- 2 975 966
- US-A1- 2006 006 286
- US-A1- 2020 130 806

## Description

### DOMAINE TECHNIQUE

L'invention se rapporte à un protecteur de champ localisé en bordure d'une porte de véhicule de transport de personnes et/ou de marchandise permettant un antiblocage de cette porte sur son champ. Plus particulièrement, la présente invention se rapporte à la protection du bord de peau de porte contre les endommagements possibles lors de l'exploitation du véhicule. D'une manière générale, tous les véhicules sont destinés à être équipés de telles portes, notamment : les aéronefs, les trains, les navires, sous-marins et tout type de véhicule.

Dans le domaine aéronautique, les portes sont positionnées le long des fuselages des aéronefs. Ces portes présentent deux positions statiques extrêmes : elles sont alors soit fermées, soit ouvertes. Fermées, elles sont dans la continuité et au plus près de la peau du fuselage pour réduire les perturbations aérodynamiques et minimiser la consommation de kérosène. Ouvertes, elles permettent la sortie des passagers et pendant leurs mouvements d'ouverture/fermeture elles ne provoquent pas de contact avec la peau du fuselage pour ne pas l'endommager et pour maintenir l'intégrité de l'aéronef. Le positionnement des portes est donc tel que celles-ci doivent être suffisamment proches de la peau du fuselage en position fermée, mais également disposer d'espace suffisant pour s'ouvrir sans y réaliser de contact. De plus, des jeux minimaux sont requis pour permettre les déformations du fuselage sous les charges de vol.

### ÉTAT DE LA TECHNIQUE

Traditionnellement les portes de véhicules sont métalliques et, en particulier dans le domaine aéronautique, lorsque les portes sont métalliques, le bord de la peau de la porte n'est pas protégé. En effet, il est possible de réparer ce bord par ragréage ou par une opération de formage du fait des dégradations survenant entre deux maintenances ciblées. Cependant, afin de s'affranchir de toute opération de réparation, l'absence de protection implique alors d'éviter que la peau de la porte entre en contact avec la peau de l'encadrement de porte. Ce contact peut résulter de déformations du fuselage ainsi que de fortes vibrations en vol ou lors de « minor crash » (accident mineur en terminologie anglaise). Dans ce dernier cas, un choc entre les peaux de porte et de fuselage pourrait entrainer un grippage local et empêcher une ouverture de porte au moins temporairement, ce qui est contraire à la réglementation de la sécurité aérienne puisqu'il faut garantir que les portes assurent leur fonction de sortie de secours.

Pour empêcher les peaux de se toucher, des butées dédiées sont installées au niveau des pièces d'interfaces entre la porte et le fuselage. Ces butées de centrages complètent les butées de pression de la porte dont le rôle est de maintenir la porte dans son encadrement lorsqu'une force s'exerce de l'intérieur du fuselage vers l'extérieur comme c'est le cas lors de la pressurisation de la cabine. Des documents de brevet tels que US2013075528 ou US2014346277 illustrent l'utilisation de telles butées. De plus, des bavettes d'étanchéité s'étendant entre la porte et le fuselage sont communément utilisées comme présenté dans le document FR2975966. Ces bavettes sont en général composées d'un matériau élastique, solidaires de la porte et présentent une portion antiblocage.

D'autre part, pour se prémunir d'un blocage de la porte dans le cas d'un minor crash, l'usage recommande de garder, lors de l'installation de la porte, un jeu minimal de 2 mm entre les butées de centrage.

Une problématique liée à ces installations est l'ensemble des réglages précis qui sont nécessaires pour provoquer un contact sur les butées de centrage avant un contact sur les peaux. Pour s'affranchir de cet inconvénient et rendre l'installation plus rapide, il faut augmenter le jeu nominal des butées de centrage et donc le jeu entre les peaux de la porte et du fuselage. Or augmenter la distance entre les peaux présente un inconvénient majeur au regard de l'aérodynamisme de l'aéronef et donc de son exploitation.

Un autre type de porte connu est constitué en matériaux composites. Ces portes peuvent être protégées par des protecteurs de champ agencés sur leur peau, mais ces pièces de protection doivent également respecter les conditions de non-contact évoquées dans le cas des portes métalliques.

De plus, les portes en matériaux composites, malgré la présence d'un protecteur de champ, sont soumises aux mêmes contraintes d'installation que les portes métalliques et en présentent donc les mêmes inconvénients de complexité de réglages précis.

### EXPOSE DE L'INVENTION

Afin de remédier aux inconvénients de l'état de la technique, l'invention a pour objectif principal d'aménager un tour de porte permettant de diminuer le gap entre les peaux de la porte et du fuselage, ce bord présentant l'avantage de réduire la précision des réglages des butées de centrages lors de l'installation de la porte, d'accepter des contacts de la porte avec la peau du fuselage sans endommagement, tout en répondant aux exigences de sécurité et en conservant la possibilité d'ouvrir la porte non bloquée en cas de « minor crash ».

Pour ce faire, l'invention prévoit d'équiper le bord de peau de la porte d'un protecteur de champ permettant de prévenir l'endommagement des peaux en cas de contact des butées de centrage tout en préservant l'ouverture de la porte en cas de « minor crash ». Ce protecteur de champ est également rendu suffisamment rigide pour ne pas défléchir de façon significative sous la différentielle de pression liée à l'écoulement de l'air sur le fuselage et maintenir les performances aérodynamiques.

Plus précisément, la présente invention a pour objet un ensemble de protection de porte de véhicule et de panneau encadrant la porte. Cette ensemble est selon la revendication 1. La porte et le panneau présentent des peaux ayant des faces externes de même profil et alignées lorsque la porte est en position fermée, ainsi que des butées de centrages en regard avec un jeu prédéfini. La porte est équipée d'un protecteur de champ antiblocage s'étendant le long d'un pourtour de peau de porte en regard de la peau du panneau séparant un intérieur et un extérieur du véhicule.

Le protecteur de champ est solidaire de la porte et présente une portion antiblocage s'interposant entre les peaux en suivant en position nominale l'alignement géométrique de leur face extérieure, ainsi qu'un jeu entre une face d'extrémité du protecteur et une face d'extrémité de la peau du panneau inférieur au jeu entre les butées de centrage. De plus, ce protecteur est composé d'un matériau élastique selon un profil évolutif dans la portion antiblocage et présentant une souplesse suffisante selon une direction parallèle au jeu entre les peaux de sorte que, en cas d'accident mineur, les peaux restent à une distance supérieure à une distance minimale de 3mm lorsque les butées de centrage viennent en contact, tout en présentant une rigidité transverse dans la direction interne-externe limitant une déflexion du protecteur à 2 mm sous une différentielle de pression de l'intérieur vers l'extérieur de 1 psi (69 mBar)due à l'écoulement aérodynamique.

Lorsque ce protecteur de champ est au contact de la peau du panneau, la porte s'ouvre et se ferme alors sans endommager les peaux de la porte et du panneau et sans générer d'effort excessif au niveau de la poignée.

Avantageusement, installer une porte comportant un protecteur de champ selon l'invention diminue les contraintes de réglage des butées de centrage en fonction du jeu entre les peaux respectives de la porte et du panneau dans laquelle elle est installée : en effet la présence du protecteur de champ permet d'augmenter la plage de jeu sur les butées de centrage puisqu'un contact sur les peaux devient acceptable. Cette plus grande tolérance d'installation diminue donc les réglages requis pour positionner les butées de centrage

Avantageusement également, si la plage de jeu entre les butées de centrage est maintenue, le protecteur de champ selon l'invention diminue mécaniquement le gap entre la porte et le panneau, ce qui favorise également l'aérodynamique du véhicule au voisinage de la porte sans en sacrifier la fonctionnalité, la porte pouvant s'ouvrir et se fermer sans endommager les peaux lors du contact du protecteur de champ avec la peau du panneau.

On entend par « gap » entre les peaux de porte et du panneau l'espace libéré par l'écart entre ces peaux. De plus, le qualificatif « transversal » et ses dérivés s'applique à un élément traversant le véhicule entre l'intérieur et l'extérieur de ce véhicule, dans un plan perpendiculaire à l'axe longitudinal du véhicule.

Selon certains modes de réalisation préférés et non limitatifs :
- un gap est conservé entre le protecteur de champ et la peau du panneau en regard tout en assurant extérieurement la continuité géométrique entre les faces externes des peaux, de sorte que le protecteur de champ est dit ouvert en condition nominale de fermeture de porte ;
- le protecteur de champ peut être installé au choix sur le pourtour entier de la porte, sur une portion et sur plusieurs portions de ce pourtour ;
- le protecteur de champ est constitué d'un matériau hyper-élastique choisi parmi le polyuréthane, le caoutchouc et le silicone ;
- le protecteur de champ comporte un système actif de variation en raideur et/ou en longueur, choisi parmi un joint gonflable en extrémité du protecteur, un matériau constitutif en polymère électro-actif, en matière à mémoire de forme, et un système à effet piézo-électrique ; un tel système actif permet la rupture de la glace qui peut se former en vol entre les peaux ;
- le protecteur de champ comporte à l'une des extrémités un aplat de fixation sur une face interne de la peau de la porte à l'intérieur du véhicule ;
- un joint de fermeture de porte se monte sur l'aplat de fixation lorsque la porte est fermée ;
- le protecteur de champ comporte une lèvre formée à son autre extrémité et qui s'étend transversalement vers l'intérieur;
- le protecteur de champ comporte un revêtement extérieur antifriction; en effet, un tel revêtement limite la friction avec l'air extérieur mais aussi lors des contacts avec la peau du panneau, ce qui résulte en une meilleure durabilité du protecteur de champ et réduit les efforts d'ouverture en cas de « minor crash » ; et
- le protecteur de champ peut combiner un matériau hyper-élastique avec un système actif.

Le protecteur de champ présente plusieurs avantages dans le cas d'un aéronef. Son profil interne ouvert favorise en particulier l'évacuation de l'eau. Si l'eau n'est pas évacuée, l'eau se solidifie aux températures extrêmes extérieures pendant les phases de vol et se dilate en se congelant, ce qui peut endommager les peaux de la porte et du panneau.

De plus le profil évolutif participe au design ouvert. Il offre également une grande possibilité de déformation dans la direction perpendiculaire à la tranche de la découpe peau et assure une raideur dans la direction de l'épaisseur des peaux. Cette flexibilité dans la direction des peaux permet de conserver l'intégrité des peaux et de maintenir le fonctionnement de la porte lors de contacts entre la peau du panneau et le protecteur de champ. Également la lèvre protège la cavité du joint de fermeture de porte du courant aérodynamique, ce qui permet d'éviter la formation de perturbations aérodynamiques.

### PRESENTATION DES FIGURES

D'autres caractéristiques et avantages de la présente invention ressortiront à la lecture qui suit d'un exemple de réalisation détaillé sans en limiter la portée, en référence aux figures annexées qui représentent, respectivement :
- la figure 1, une vue latérale d'un aéronef avec des hublots et une porte en position fermée (configuration nominale) ;
- la figure 2, une vue en coupe à l'interface entre la porte et le panneau de fuselage en position nominale ;
- la figure 3, une vue en coupe à l'interface entre la porte et le panneau lors d'un choc entre la porte et le panneau ;
- la figure 4, une vue en coupe à l'interface entre la porte et le panneau lors de l'ouverture de la porte suite au contact, et
- la figure 5, une vue en coupe à l'interface entre la porte et le panneau lors de l'ouverture de la porte, la porte n'étant plus en contact avec le fuselage.

### DESCRIPTION DETAILLEE

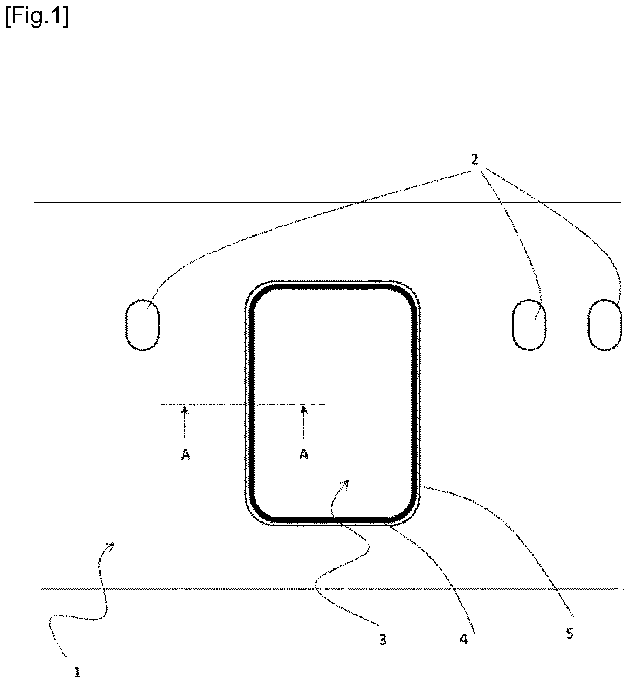

La figure 1 représente une vue latérale d'un aéronef illustrant un panneau 1, des hublots 2 ainsi qu'une porte 3 en position fermée avec sa bordure s'étendant sur son pourtour. Dans cet exemple, le panneau 1 est une portion de tronçon du fuselage de l'aéronef et la porte 3 est une porte représentative des portes classiques d'aéronefs, une porte passagers dans l'exemple, mais l'invention s'applique également aux portes de secours de l'aéronef. Une ouverture de porte 5 est percée dans le panneau 1 pour accueillir la porte 3 équipée de son protecteur de champ 4. Dans cet exemple de réalisation le protecteur de champ 4 fait le pourtour entier de la porte 3, mais il peut être présent uniquement sur une ou plusieurs portions du pourtour de la porte 3.

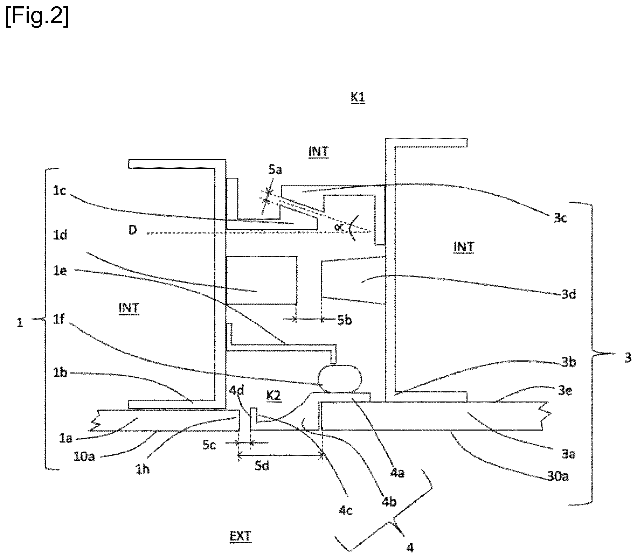

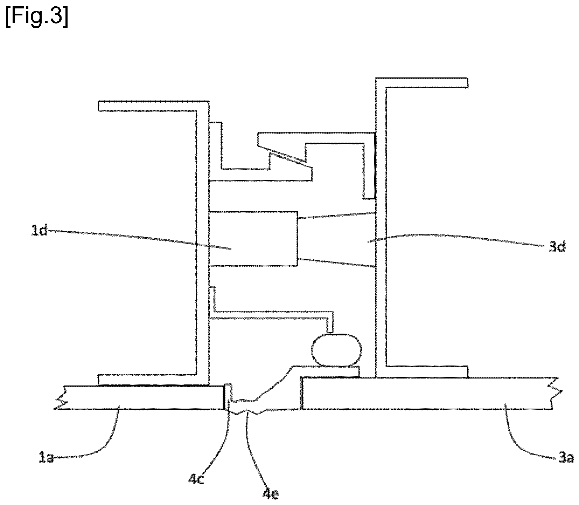

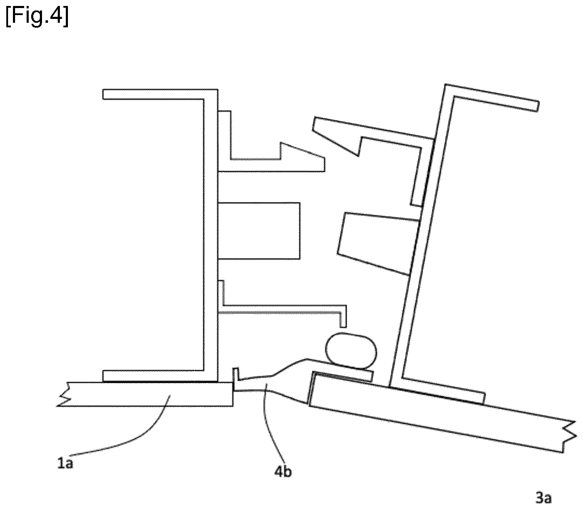

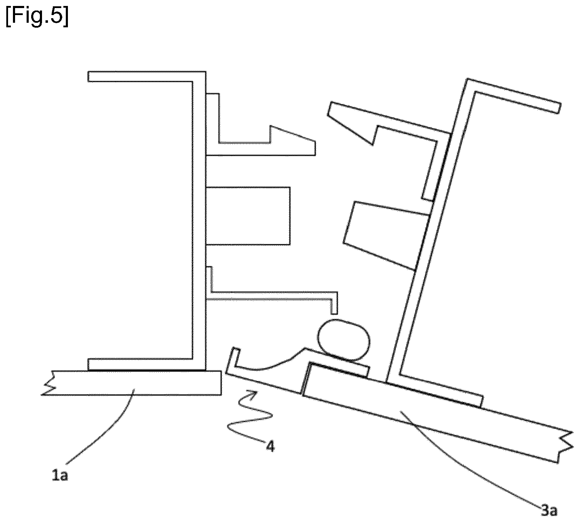

Orthogonal à la vue latérale de la figure 1, un plan de coupe A-A permet d'illustrer les caractéristiques de la bordure de porte sur la figure 2, la porte étant fermée, sur la figure 3, lors d'un choc ou lors d'un minor crash puis sur la figure 4 et la figure 5, lors de l'ouverture de la porte à la suite d'un minor crash.

La vue en coupe de la figure 2 montre plus précisément les éléments constitutifs de l'interface entre le panneau 1 et la porte 3 en position fermée (configuration nominale). Le panneau 1 comporte une peau 1a et un cadre 1b. La peau de panneau 1a fait cloison séparant un espace intérieur INT et un espace extérieur EXT de l'aéronef. Le cadre de panneau 1b est monté en appui sur la peau de panneau 1a et supporte des butées de pression 1c et des butées de centrage 1d, ainsi que l'appui joint 1e sur lequel vient s'appuyer le joint 1f lors de la fermeture de la porte 3. De manière équivalente, la porte 3 comporte une peau 3a et un cadre 3b, la peau de la porte 3a faisant également cloison entre l'espace intérieur INT de l'aéronef débouchant sur la cabine K1 dans l'exemple et l'espace extérieur EXT hors de l'aéronef. Les faces externes 10a et 30a, respectivement des peaux 1a et 3a, possèdent le même profil et sont alignées lorsque la porte 3 est en position fermée. Le cadre de porte 3b est quant à lui monté en appui sur la peau de la porte 3a et supporte des butées de pression 3c et des butées de centrage 3d. Le joint 1f est monté sur le protecteur de champ 4 dans ce mode de réalisation ou sur la surface interne 3e de la peau de la porte.

Les butées de pression 1c et 3c sont disposées en regard avec un angle d'inclinaison ∝, qui peut être nul, déterminé par rapport à la direction « D » des traces de peau dans le plan A-A. Ces butées de pression 1c et 3c maintiennent la porte 3 fermée, donc avec un jeu 5a nul, pendant toute la durée du vol. Quant aux butées de centrage 1d et 3d, elles sont disposées en regard dans la direction « D » avec un jeu prédéfini 5b. Ces butées de centrage 1d et 3d ont pour rôle d'empêcher les peaux 1a et 3a de se toucher mais aussi de garantir un positionnement des butées de pression.

Le protecteur de champ 4 selon l'exemple de réalisation, solidaire de la porte 3 tout en s'étendant parallèlement à la peau de porte 3a et dans le prolongement de cette peau, comporte trois sections : un aplat de fixation 4a, une portion médiane 4b et une lèvre d'extrémité 4c. Il est moulé selon un profil évolutif dans un matériau présentant un plateau de déformation de type élastique, un polyuréthane dans l'exemple ou, plus généralement et de préférence, un matériau hyper-élastique.

Sur une portion d'extrémités du protecteur 4, du côté de la porte 3, l'aplat de fixation 4a est riveté sur la face interne 3e de la peau de porte 3a, à l'intérieur du véhicule. A l'autre extrémité du protecteur 4, du côté du panneau 1, la lèvre d'extrémité 4c s'étend transversalement vers l'intérieur de l'aéronef afin d'éviter toute perturbation aérodynamique dans la cavité interne K2 limitée par le joint de fermeture de porte 1f et l'extérieur EXT.

En position médiane entre la lèvre 4c et l'aplat 4a, la portion médiane 4b s'interpose entre les peaux 1a et 3a en suivant extérieurement l'alignement géométrique de leur face externe 10a et 30a lorsque la porte 3 est fermée. La portion médiane 4b augmente en épaisseur depuis sa lèvre d'extrémité 4c jusqu'à l'aplat 4a, définissant le profil évolutif de l'exemple de réalisation selon une courbe croissante de type exponentiel dans l'exemple de réalisation. Un jeu 5c est défini entre la face 4d de la lèvre 4c en regard de la face d'extrémité transverse 1h de la peau de panneau 1a, ce jeu 5c étant inférieur au jeu 5b entre les butés de centrage 1d et 3d - de 75% inférieur dans l'exemple de réalisation.

En condition nominale de fermeture de porte, ce jeu 5c conserve un gap entre le protecteur de champ 4 et la peau du panneau 1a en regard, tout en assurant extérieurement la continuité géométrique entre les faces extérieures des peaux 1a et 3a : le protecteur de champ 4 est alors dit ouvert, c'est-à-dire qu'il autorise la circulation d'un fluide dans la cavité K2. De plus la rigidité du protecteur de champ 4 dans la direction transverse interne-externe limite la déflexion du protecteur à une valeur inférieure à environ 2 mm sous une pression aérodynamique de 1psi (69mBar), cette déflection résultant des propriétés mécaniques du matériau élastique utilisé combinées au profil évolutif de sa portion médiane 4b.

La vue en coupe de la Figure 3 illustre le résultat d'un choc entre le protecteur de champ 4 et la peau du panneau 1a lors de mouvements de vibrations ou de minor crash de la porte 3. En particulier le matériau constitutif du protecteur de champ 4 présente une souplesse suffisante, selon la direction D parallèle au jeu 5d entre les peaux 1a et 3a, lui permettant de se déformer élastiquement, les peaux restant ainsi à une distance supérieure à une distance minimale lorsque les butées de centrage 1d et 3d viennent en contact. La déformation 4e, bien que présentant une discontinuité dans la ligne aérodynamique de l'aéronef, produit des perturbations moindres qu'un gap entre les peaux 1a et 3a et de durée réduite donc insignifiante pour la consommation de l'aéronef.

Lorsque le mouvement vibrationnel se termine, la porte 3 se déplace pour retourner à une position nominale telle qu'illustrée en figure 2, dans laquelle les butées de centrage 1d et 3d ne sont plus en contact et les propriétés élastiques du protecteur de champ 4 ramènent ce protecteur à son élongation nominale.

Le protecteur de champ 4 est soumis à des contraintes de friction de la part de l'air extérieur et lors de ses contacts avec la peau du panneau 1a. Ces contraintes de friction entrainent l'usure du protecteur de champ 4 : afin d'en améliorer la durabilité et de compléter les propriétés du matériau hyper-élastique, il comporte dans cet exemple un revêtement extérieur antifriction (non représenté) sur ses surfaces externes. Ce revêtement antifriction sert aussi à réduire les efforts d'ouverture lors d'un minor crash.

Lors de l'ouverture en minor crash, le protecteur de champ 4 frotte sur le panneau de fuselage 1a. La forme et la matière du protecteur de champ 4 permettent alors une ouverture compatible avec les requis d'effort sur la poignée de porte (non représentée) par glissement sur le panneau de fuselage 1a.

La Figure 4 et la Figure 5 décomposent le comportement du protecteur de champ 4 lors de l'ouverture de la porte 3 suite au choc entre la peau du panneau 1a et le protecteur de champ 4, en particulier lors d'un minor crash.

Lorsque la porte est ouverte plus largement (Figure 5), le protecteur de champ 4 s'éloigne de la peau de panneau 1a : la rigidité transverse et l'élasticité du protecteur de champ 4 lui permettent de revenir dans son élongation et son orientation nominale par rapport à la peau de la porte 3a.

Dans le cadre de l'invention, le protecteur de champ 4 et le jeu 5c occupent l'espace défini par la distance 5d (cf. Figure 2) entre les peaux 1a et 3a. Sans protecteur de champ 4, cette distance 5d est voisine du jeu 5c ce qui induit des phases itératives de réglage précis afin de positionner la porte 3 à une distance minime du panneau 1 permettant l'ouverture sans contact entre les peaux 1a et 3a. L'invention permet donc de s'affranchir de telles étapes de réglage, le contact entre le protecteur de champ 4 et la peau du panneau 1a étant de plus possible sans entraver l'ouverture de la porte 3.

Les figures précédentes décrivent un protecteur de champ 4 de type passif, dont le fonctionnement est lié aux propriétés mécaniques intrinsèques du type de matériau et au profil évolutif de ce protecteur. Un autre type de solution comprise dans le champ de protection de la présente invention privilégie un protecteur de champ 4 de type actif, dont les propriétés mécaniques sont activées par une commande externe, telle qu'un système actif de variation en raideur et/ou en longueur d'un joint gonflable en extrémité du protecteur de champ 4. D'autres systèmes ou matériaux actifs peuvent être utilisés : un matériau en polymère électro-actif, en matière à mémoire de forme ou un système effet piézo-électrique.

Ces systèmes actifs offrent un contrôle précis et adaptatif du comportement du protecteur de champ 4 : deux de ces systèmes actifs peuvent également être utilisés en combinaison, l'un plus particulièrement dédié à l'élasticité longitudinale et l'autre dédié à la raideur transverse. Un autre avantage d'un système actif est de pouvoir proposer un effet de dégivrage et de rupture de glace qui peut se former en vol entre les peaux 1a et 3a. Un système actif peut également être monté en combinaison avec un système passif afin de le compléter et d'en renforcer les propriétés mécaniques.

Le protecteur de champs 4 peut également être obtenu par d'autres moyens que le moulage comme par usinage ou impression 3D.

## Revendications

1. Ensemble de porte (3), de panneau (1) et de protection de porte (3) de véhicule et de panneau (1) encadrant la porte (3), la porte (3) et le panneau (1) présentant des peaux (1a, 3a) ayant des faces externes de même profil et alignées lorsque la porte (3) est en position fermée, ainsi que des butées de centrage (1d , 3d) en regard avec un jeu (5b) prédéfini, la porte (3) étant équipée d'un protecteur de champ (4) :
- étant solidaire de la porte (3),
- s'étendant le long d'un pourtour de peau de porte (3a) en regard de la peau de panneau (1a) séparant un intérieur (INT) et un extérieur (EXT) du véhicule ;
- présentant une portion antiblocage s'interposant entre les peaux (1a, 3a) en suivant en position nominale l'alignement géométrique de leur face extérieure, et
- étant composé d'un matériau élastique selon un profil évolutif dans la portion antiblocage présentant une souplesse suffisante selon une direction parallèle à un jeu (5d) entre les peaux (1a, 3a), ce protecteur de champ (4) étant **caractérisé en ce qu'**il présente un jeu (5c) entre une face d'extrémité du protecteur de champ et une face d'extrémité de la peau du panneau (1a) inférieur au jeu (5b) entre les butées de centrage (1d, 3d), et **en ce qu'**en cas d'accident mineur, les peaux (1a, 3a) restent à une distance supérieure à une distance minimale lorsque les butées de centrage (1d, 3d) viennent en contact tout en présentant une rigidité transverse dans la direction interne-externe limitant une déflexion de ce protecteur de champ (4) inférieure à 2mm sous une pression aérodynamique locale externe de 1psi (69 mBar).

2. Ensemble de porte (3), de panneau (1) et de protection selon la revendication 1, dans lequel un gap est conservé entre le protecteur de champ (4) et la peau du panneau (1a) en regard tout en assurant extérieurement la continuité géométrique entre les faces externes (10a, 30a) des peaux (1a, 3a), de sorte que le protecteur de champ (4) est dit ouvert en condition nominale de fermeture de porte.

3. Ensemble de porte (3), de panneau (1) et de protection selon l'une quelconque des revendications précédentes, dans laquelle le protecteur de champ (4) est installé au choix sur le pourtour entier de la porte (3), sur une portion et sur plusieurs portions de ce pourtour.

4. Ensemble de porte (3), de panneau (1) et de protection selon l'une quelconque des revendications précédentes, dans lequel le protecteur de champ (4) est constitué d'un matériau hyper-élastique choisi parmi le polyuréthane, le caoutchouc et le silicone.

5. Ensemble de porte (3), de panneau (1) et de protection selon l'une quelconque des revendications 1 à 3, dans lequel le protecteur de champ (4) comporte un système actif de variation en raideur et/ou en longueur, choisi parmi un joint gonflable en extrémité du protecteur de champ, un matériau constitutif en polymère électro-actif, en matière à mémoire de forme, et un système à effet piézo-électrique.

6. Ensemble de porte (3), de panneau (1) et de protection selon l'une quelconque des revendications précédentes, dans lequel le protecteur de champ (4) comporte à l'une des extrémités un aplat de fixation (4a) sur une face interne de la peau de la porte (3a) à l'intérieur du véhicule.

7. Ensemble de porte (3), de panneau (1) et de protection selon la revendication 6, dans lequel un joint (1f) de fermeture de porte est monté sur l'aplat de fixation (4a) lorsque la porte (3) est fermée.

8. Ensemble de porte (3), de panneau (1) et de protection selon l'une quelconque des revendications précédentes en combinaison avec la revendication 6, dans lequel le protecteur de champ (4) comporte une lèvre (4c) formée à son autre extrémité et qui s'étend transversalement vers l'intérieur.

9. Ensemble de porte (3), de panneau (1) et de protection selon l'une quelconque des revendications précédentes, dans lequel le protecteur de champ (4) comporte un revêtement extérieur antifriction.

## Patentansprüche

1. Anordnung aus Tür (3), Paneel (1) und Schutz einer Tür (3) eines Fahrzeugs und eines Paneels (1), das die Tür (3) umgibt, wobei die Tür (3) und das Paneel (1) Häute (1a, 3a) aufweisen, die Außenflächen besitzen, die das gleiche Profil haben und fluchten, wenn die Tür (3) in geschlossener Position ist, sowie gegenüber liegende Zentrieranschläge (1d, 3d) mit einem vorgegebenen Spiel (5b), wobei die Tür (3) mit einem Kantenschützer (4) ausgestattet ist:
- der mit der Tür (3) fest verbunden ist,
- der sich entlang eines Umfangs einer Türhaut (3a) gegenüber der Paneelhaut (1) erstreckt, die einen Innenraum (INT) und einen Außenraum (EXT) des Fahrzeugs trennt;
- der einen Antiblockierabschnitt aufweist, der zwischen den Häuten (1a, 3a) angeordnet ist, wobei er in der Nennposition der geometrischen Fluchtung ihrer Außenfläche folgt, und
- der aus einem elastischen Material gemäß einem evolutiven Profil in dem Antiblockierabschnitt besteht, das eine ausreichende Weichheit entlang einer parallel zu einem Spiel (5d) zwischen den Häuten (1a, 3a) verlaufenden Richtung aufweist,
wobei dieser Kantenschützer (4) **dadurch gekennzeichnet ist, dass** er ein Spiel (5c) zwischen einer Endfläche des Kantenschützers und einer Endfläche der Haut des Paneels (1a) aufweist, das kleiner als das Spiel (5b) zwischen den Zentrieranschlägen (1d, 3d) ist, und dadurch, dass im Fall eines leichteren Crashes die Häute (1a, 3a) in einem Abstand bleiben, der größer als ein minimaler Abstand ist, wenn die Zentrieranschläge (1d, 3d) in Kontakt gelangen, und dabei eine Quersteifigkeit in der Richtung innen-außen aufweist, die eine Auslenkung dieses Kantenschützers (4) auf weniger als 2 mm unter einem äußeren lokalen aerodynamischen Druck von 1 psi (69 mbar) begrenzt.

2. Anordnung aus Tür (3), Paneel (1) und Schutz nach Anspruch 1, wobei ein Spalt zwischen dem Kantenschützer (4) und der gegenüber liegenden Haut des Paneels (1a) beibehalten wird und dabei außen die geometrische Kontinuität zwischen den Außenflächen (10a, 30a) der Häute (1a, 3a) gewährleistet wird, so dass der Kantenschützer (4) im Nennschließzustand der Tür als offen bezeichnet wird.

3. Anordnung aus Tür (3), Paneel (1) und Schutz nach einem der vorhergehenden Ansprüche, wobei der Kantenschützer (4) wahlweise an dem gesamten Umfang der Tür (3), an einem Abschnitt und an mehreren Abschnitten dieses Umfangs angebracht ist.

4. Anordnung aus Tür (3), Paneel (1) und Schutz nach einem der vorhergehenden Ansprüche, wobei der Kantenschützer (4) aus einem hyperelastischen Material besteht, das aus Polyurethan, Kautschuk und Silikon gewählt ist.

5. Anordnung aus Tür (3), Paneel (1) und Schutz nach einem der Ansprüche 1 bis 3, wobei der Kantenschützer (4) ein aktives System zur Änderung der Steifigkeit und/oder Länge beinhaltet, das aus einer aufblasbaren Dichtung am Ende des Kantenschützers, einem Material aus elektrisch aktivem Polymer, einem Werkstoff mit Formgedächtnis und einem System mit piezoelektrischem Effekt gewählt ist.

6. Anordnung aus Tür (3), Paneel (1) und Schutz nach einem der vorhergehenden Ansprüche, wobei der Kantenschützer (4) an einem der Enden ein Befestigungsflachstück (4a) an einer Innenfläche der Haut der Tür (3a) im Innenraum des Fahrzeugs beinhaltet.

7. Anordnung aus Tür (3), Paneel (1) und Schutz nach Anspruch 6, wobei eine Türschließdichtung (1f) an dem Befestigungsflachstück (4a) montiert ist, wenn die Tür (3) geschlossen ist.

8. Anordnung aus Tür (3), Paneel (1) und Schutz nach einem der vorhergehenden Ansprüche in Kombination mit Anspruch 6, wobei der Kantenschützer (4) eine Lippe (4c) beinhaltet, die an seinem anderen Ende gebildet ist und die sich quer zum Innenraum hin erstreckt.

9. Anordnung aus Tür (3), Paneel (1) und Schutz nach einem der vorhergehenden Ansprüche, wobei der Kantenschützer (4) eine reibungsvermindernde Außenbeschichtung beinhaltet.

## Claims

1. Assembly of a door (3), a panel (1) and of a protection of the vehicle door (3) and the panel (1) surrounding the door (3), the door (3) and the panel (1) having skins (1a, 3a) having external faces with the same profile that are aligned when the door (3) is in the closed position, as well as facing centering abutments (1d, 3d) with a predefined clearance (5b), the door (3) being equipped with an edge protector (4):
being secured to the door (3),
extending along a perimeter of the door skin (3a) facing the panel skin (1a) separating an interior (INT) and an exterior (EXT) of the vehicle,
having an antijamming portion disposed between the skins (1a, 3a) in a nominal geometrical alignment position of their exterior face, and
consisting of an elastic material with a profile adapted to evolve in the antijamming portion having sufficient flexibility in a direction parallel to the clearance (5d) between the skins (1a, 3a),
this edge protector (4) being **characterized in that** it features a clearance (5c) between an edge face of the edge protector and an edge face of the skin of the panel (1a) less than the clearance (5b) between the centering abutments (1d, 3d), and **in that** in the event of a minor accident the skins (1a, 3a) remain at a distance greater than a minimum distance when the centering abutments (1d, 3d) come into contact while having a transverse rigidity in the internal-external direction limiting deflection of this edge protector (4) to less than 2 mm under a local external aerodynamic pressure of 1 psi (69 mBar).

2. The door (3), panel (1) and protection assembly as claimed in claim 1 in which a gap is preserved between the edge protector (4) and the facing skin of the panel (1a) while externally assuring the geometric continuity between the external faces (10a, 30a) of the skins (1a, 3a) so that the edge protector (4) is referred to as open under nominal door closure conditions.

3. The door (3), panel (1) and protection assembly as claimed in any one of the preceding claims in which the edge protector (4) is installed on the entire perimeter of the door (3), on a portion of or on a plurality of portions of that perimeter.

4. The door (3), panel (1) and protection assembly as claimed in any one of the preceding claims in which the edge protector (4) is made of a hyper-elastic material chosen from polyurethane, rubber and silicone.

5. The door (3), panel (1) and protection assembly as claimed in any one of claims 1 to 3 in which the edge protector (4) includes an active stiffness and/or length variation system chosen from an inflatable seal at the edge of the protector, an electroactive polymer constituent material, a shape memory material and a piezo-electric effect system.

6. The door (3), panel (1) and protection assembly as claimed in any one of the preceding claims in which the edge protector (4) includes on one of its edges a flat (4a) for fixing it to an internal face of the skin of the door (3a) inside the vehicle.

7. The door (3), panel (1) and protection assembly as claimed in claim 6 in which a door closure seal (1f) is mounted on the fixing flat (4a) when the door (3) is closed.

8. The door (3), panel (1) and protection assembly as claimed in any one of the preceding claims in combination with claim 6 in which the edge protector (4) includes a lip (4c) formed on its other edge that extends transversely inward.

9. The door (3), panel (1) and protection assembly as claimed in any one of the preceding claims in which the edge protector (4) includes an exterior antifriction coating.
